# EUROPÄISCHE PATENTSCHRIFT

(11) **EP 0 886 063 B1**
(45) Veröffentlichungstag und Bekanntmachung des Hinweises auf die Patenterteilung: **21.05.2003**
(21) Anmeldenummer: 98110885.5
(22) Anmeldetag: 15.06.1998
(51) Int. Cl.: F02M 35/10, F02M 25/07

(54) **Ansaugluftverteiler**
Intake air manifold
Collecteur d'air d'admission

(30) Priorität: 20.06.1997 DE 19726162
(43) Veröffentlichungstag der Anmeldung: 23.12.1998
(73) Patentinhaber: ROBERT BOSCH GMBH, 70442 Stuttgart (DE)
(72) Erfinder: Schellenberg, Gerhard, 70734 Fellbach (DE); Doba, Andreas, 73732 Esslingen (DE); Wizgall, Eberhard, 71665 Vaihingen/Enz (DE); Valdauf, Radim, 38232 Valesin (CZ)

(56) Entgegenhaltungen:
- EP-A- 0 844 381
- US-A- 4 271 801
- US-A- 4 643 136
- US-A- 5 433 183

## Beschreibung

Die Erfindung betrifft einen Ansaugluftverteiler für eine Brennkraftmaschine mit den im Oberbegriff des Anspruchs 1 genannten Merkmalen.

### Stand der Technik

Ansaugluftverteiler der gattungsgemäßen Art sind bekannt. Diese dienen dazu, ein Gasgemisch einer Brennkraftmaschine zuzuführen. Hierzu besitzt der Ansaugluftverteiler ein Gehäuse, in dem eine Luftzuführöffnung mündet, über die Umgebungsluft oder komprimierte Luft, zum Beispiel bei Turbomotoren, der Brennkraftmaschine angesaugt wird. Ferner besitzt das Gehäuse entsprechend einer Zylinderanzahl der Brennkraftmaschine abgehende Auslaßöffnungen, die über Ansaugrohre mit den Zylindern der Brennkraftmaschine verbunden sind. Den Auslaßöffnungen sind Ventilklappen zugeordnet, über die ein Durchlaßquerschnitt einstellbar ist, so daß eine Regelung eines Gasgemisches zu den Zylindern der Brennkraftmaschine möglich ist.

Um einen Wirkungsgrad der Brennkraftmaschine zu erhöhen ist bekannt, der Verbrennungsluft Abgas der Brennkraftmaschine zuzuführen. Hierzu besitzt das Gehäuse eine Abgaszuführöffnung, die mittels eines Abgasrückführungsventiles verschließbar ist. Über das Abgasrückführungsventil kann die Menge des der Verbrennungsluft zugeführten Abgases reguliert werden. Das Abgasrückführungsventil und die Ventilklappen in den Auslassöffnungen des Gehäuses werden bekanntermaßen mittels elektropneumatischer Schaltmittel angesteuert.

Aus der US-PS 5,433,183 ist ein Verbindungsstück bekannt, mittels dem ein heißes Abgas führendes Rohr in ein Kunststoffteil münden kann. Hierbei ist das heiße Abgas führende Rohr Bestandteil eines gesamten Gasführungselementes, das innerhalb des Kunststoffteiles angeordnet ist.

Aufgrund der Zuführung von heißem Abgas zu dem Ansaugluftverteiler muss dieses eine Temperaturbeständigkeit aufweisen. Es ist bekannt, den Ansaugluftverteiler aus Aluminiumdruckgussteilen zu fertigen, die zueinander gefügt werden. Hierbei ist nachteilig, dass eine Vielzahl einzelner Trennfugen abgedichtet werden müssen. Darüber hinaus sind Aluminiumdruckgussteile nur mit einem verhältnismäßig hohen Aufwand herstellbar.

### Vorteile der Erfindung

Der erfindungsgemäße Ansaugluftverteiler mit den im Anspruch 1 genannten Merkmalen bietet den Vorteil, dass er einfach und kompakt aufgebaut ist, günstig herstellbar ist und beständig gegen hohe Abgastemperaturen ist. Dadurch, dass das Gehäuse ein Kunststoffteil ist, wobei im Bereich der Abgaszuführöffnung ein innenliegendes, aus einem temperaturbeständigen Material bestehendes Gasführungselement angeordnet ist, das Gasführungselement einen integrierten Anschlussstutzen für eine Abgasleitung umfasst und das Gasführungselement eine Befestigungseinrichtung für das elektropneumatische Schaltmittel zur Betätigung des Abgasrückführungsventils ausbildet, kann das Gehäuse selber, in für eine Massenfertigung geeigneter Weise, als Kunststoffspritzteil gefertigt werden. Hierbei sind auch komplizierte Formgebungen in einfacher Weise erzielbar. Durch das innenliegende Gasführungselement wird eine Temperaturbeständigkeit des Gehäuses gewährleistet. Zum Einbringen des Gasführungselementes, besteht das Gehäuse bevorzugterweise aus zwei Einzelteilen, so dass zur Komplettierung des Gehäuses lediglich eine Teilungsfuge vorhanden ist.

Da das Gasführungselement einen integrierten Anschlussstutzen für eine Abgasleitung umfasst, sind zur Führung des heißen Abgases in das Gasführungselement keine zusätzlichen Durchführungen beziehungsweise Abdichtungen notwendig. Da ferner das Gasführungselement darüber hinaus eine Befestigungseinrichtung für das elektropneumatische Schaltmittel zur Betätigung des Abgasrückführungsventiles ausbildet, die bevorzugterweise als Bajonettverschluss ausgebildet ist, wird in vorteilhafter Weise erreicht, dass eine Komplettierung des Ansaugluftverteilers ohne zusätzliche Verbindungsmittel auskommt. Durch die Ausbildung der Befestigungseinrichtung kann das elektropneumatische Schaltmittel hieran mittels des vorzugsweise vorgesehenen Bajonettverschlusses befestigt werden, wobei gleichzeitig die Gehäuseteile des Ansaugluftverteilers und des Gasführungselementes gefügt werden. So ist ein besonders einfacher und kompakter Ansaugluftverteiler geschaffen.

Weitere vorteilhafte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: eine Vorderansicht eines Ansaugluftverteilers;
- Figur 2: eine Schnittdarstellung durch den Ansaugluftverteiler;
- Figur 3: eine Draufsicht auf den Ansaugluftverteiler;
- Figur 4: eine Unteransicht des Ansaugluftverteilers;
- Figur 5: einen Querschnitt entlang der Linie B-B gemäß Figur 1;
- Figur 6: einen Querschnitt entlang der Linie C-C gemäß Figur 1;
- Figur 7: einen Schnitt entlang der Linie D-D gemäß Figur 1 und
- Figuren 8 und 9: vergrößerte Detailansichten aus Figur 2.

### Beschreibung des Ausführungsbeispiels

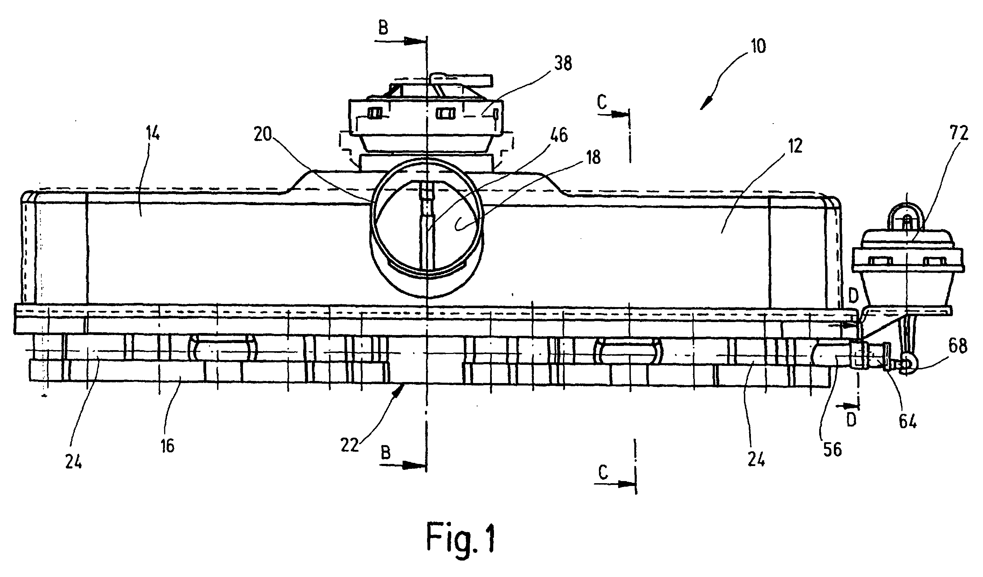

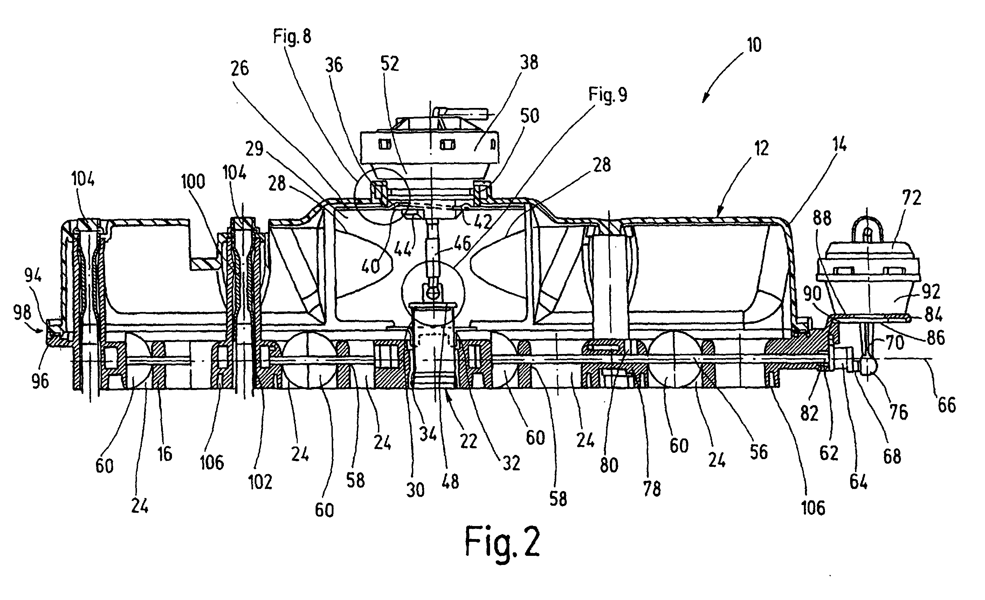

In Figur 1 ist ein Ansaugluftverteiler 10 gezeigt. Der Ansaugluftverteiler 10 besitzt ein Gehäuse 12. Das Gehäuse 12 besteht - wie Figur 2 verdeutlicht - aus einem Gehäuseoberteil 14 und einem Gehäuseunterteil 16. Das Gehäuse 12, das heißt, die Gehäuseteile 14 und 16, bestehen aus Kunststoffteilen, die mittels einer Spritzgußtechnik herstellbar sind. Als Kunststoffmaterial wird beispielsweise Polyamid verwendet. In das Gehäuse 12 mündet eine Luftzuführöffnung 18, die von einem mit dem Gehäuseteil 14 einstückig ausgebildeten Flansch 20 gebildet wird.

Ferner besitzt das Gehäuse 12 eine Abgaszuführöffnung 22, die als Durchgangsöffnung im Gehäuseunterteil 16 ausgebildet ist. Das Gehäuseunterteil 16 besitzt ferner Auslaßöffnungen 24, an die jeweils ein zu einem Zylinder einer nicht dargestellten Brennkraftmaschine führendes Ansaugrohr anflanschbar ist. Im gezeigten Beispiel ist ein Ansaugluftverteiler 10 für eine Brennkraftmaschine mit vier Zylindern gezeigt. Selbstverständlich ist der Ansaugluftverteiler 10 auch für Brennkraftmaschinen mit weniger oder mehr Zylindern einsetzbar. Hierbei ändert sich entsprechend der Anzahl der Zylinder die Anzahl der Auslaßöffnungen 24.

Die weitere Erläuterung des Aufbaus des Ansaugluftverteilers 10 erfolgt anhand der Schnittdarstellung in Figur 2, wobei gleiche Teile wie in Figur 1 mit gleichen Bezugszeichen versehen und nicht nochmals erläutert sind. Lediglich anhand von Figur 2 erläuterte Teile sind in Figur 1 ebenfalls mit den gleichen Bezugszeichen versehen.

Innerhalb des Gehäuses 12 ist ein Gasführungselement 26 angeordnet, das aus einem temperaturbeständigen Material, beispielsweise Blech, besteht. Das Gasführungselement 26 ist als im wesentlichen quaderförmiges Teil ausgebildet, welches Gasleitelemente 28 und Formmerkmale 29 besitzt, die ein Vermischen der über die Luftzuführöffnung 18 zugeführte Frischluft und dem über die Abgaszuführöffnung 22 zugeführten Abgas optimiert. Insbesondere wird eine optimale gleichmäßige Verteilung des Gasgemisches auf die Anschlußöffnung 24 erzielt. Das Gasführungselement 26 besitzt hierzu Öffnungen, die ein Austreten der Frischluft beziehungsweise eines Luft-Abgas-Gemisches zu den Auslaßöffnungen 24 gestattet. Das Gasführungselement 26 umfaßt einen integrierten Anschlußstutzen 30, der durch die Abgaszuführöffnung 22 geführt ist und dem Anschluß einer nicht dargestellten Abgasleitung dient. Der Anschlußstutzen 30 ist in das Gasführungselement 26 eingesetzt. Eine Verbindung zwischen dem Anschlußstutzen 30 und dem Gasführungselement 26 kann beispielsweise mittels einer Umbördelung 32 erfolgen. Zur dichten Durchführung des Anschlußstutzens 30 durch die Abgaszuführöffnung 22 ist eine thermisch stabile Dichtung 34, die beispielsweise aus Kupfer besteht, vorgesehen.

Das Gasführungselement 26 bildet ferner eine Befestigungseinrichtung 36 zur Aufnahme eines elektropneumatischen Schaltmittels 38 aus. Die Befestigungseinrichtung 36 besitzt hierzu eine Durchgangsöffnung 40, an deren Umfang Formmerkmale 42 vorgesehen sind, die ein Einrasten des elektropneumatischen Schaltmittels 38 nach Art eines Bajonettverschlusses gestatten. Das heißt, durch Verdrehen des elektropneumatischen Schaltmittels 38, das mit den Formmerkmalen 42 korrespondierende Formmerkmale 44 aufweist, erfolgt ein axiales Verlagern, und somit Festspannen des elektropneumatischen Schaltmittels 38.

Das elektropneumatische Schaltmittel 38 ist als Unterdruckdose ausgeführt, dessen Aufbau und Funktion allgemein bekannt sind, so daß hierauf nicht detaillierter eingegangen werden soll. Das elektropneumatische Schaltmittel 38 weist eine mittels einer Membran betätigbare Ventilstange 46 auf, die einen Ventilteller 48 trägt, mittels dem der Anschlußstutzen 30 verschließbar ist.

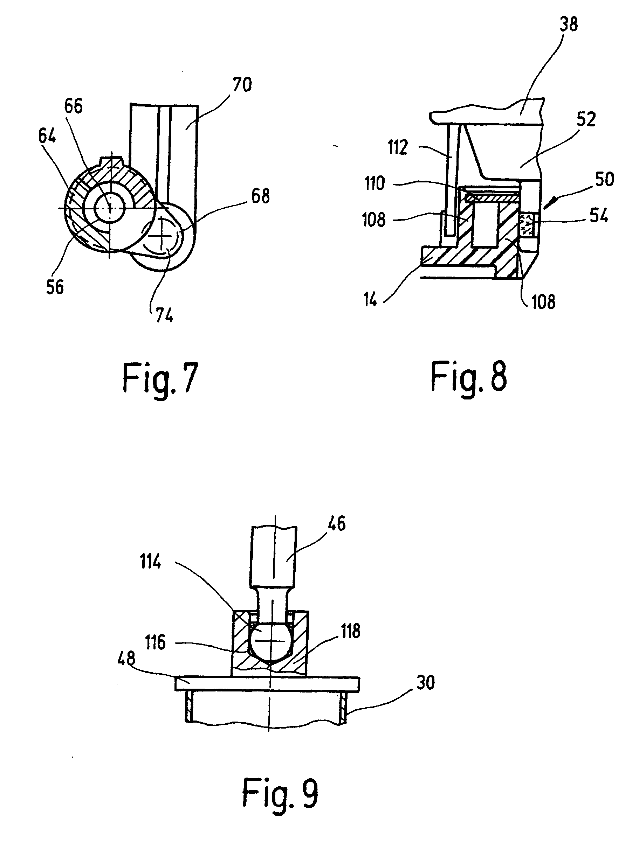

Im Bereich der Durchgangsöffnung 40 des Gasführungselementes 26 bildet das Gehäuseoberteil 14 eine Aufnahme 50 für ein Gehäuse 52 des elektropneumatischen Schaltmittels 38 aus. Die Aufnahme 50 und das Gehäuse 52 sind in ihrer Kontur aufeinander abgestimmt, so daß sich Auflagebereiche zwischen der Aufnahme 50 und dem Gehäuse 52 ergeben. Zum dichten Einsetzen des elektropneumatischen Schaltmittels 38 ist zwischen dem Gehäuse 52 und der Aufnahme 50 eine Dichteinrichtung, beispielsweise ein Dichtring 54, angeordnet. In den Figuren 8 und 9 sind vergrößerte Darstellungen des Anlagebereiches zwischen dem Gehäuse 52 und der Aufnahme 50 sowie zwischen dem Ventilteller 48 und dem Anschlußstutzen 30 gezeigt.

Das Gehäuseunterteil 16 wird von einer Schaltwelle 56 durchgriffen, die über das Gehäuse 12 hinaus verlängert ist und in im Gehäuseunterteil 16 vorgesehenen Durchführungen 58 gelagert ist. Die Schaltwelle 56 trägt im Bereich der Auslaßöffnungen 24 Ventilklappen 60, die drehfest mit der Schaltwelle 56 verbunden sind. Die Ventilklappen 60 sind beispielsweise kreisrund ausgebildet, wobei ein Durchmesser einem Durchmesser der Auslaßöffnungen 24 angepaßt ist. An dem über das Gehäuse 12 hinausragenden Ende 62 der Schaltwelle 56 ist ein Hebel 64 drehfest angeordnet. Der Hebel 64 besitzt eine parallel zu einer Längsachse 66 der Schaltwelle 56 verlaufende Kurbel 68, die mit einer Ventilstange 70 eines elektropneumatischen Schaltmittels 72 drehbeweglich verbunden ist. Hierzu weist die Kurbel 68 einen Kugelkopf 74 auf, der in eine kugelförmige Ausnehmung 76 der Ventilstange 70 eingreift. Die Verbindung zwischen Kugelkopf 74 und Ausnehmung 76 kann beispielsweise durch eine Rastung erfolgen.

Die Schaltwelle 56 ist gegen axiales Verrutschen mittels eines Sicherungsringes 78 gesichert. Der Sicherungsring 78 ist durch eine Ausnehmung 80 des Gehäuseunterteils 16 über die Schaltwelle 56 rastbar. Zur Abdichtung des Innenraumes des Gehäuses 12 ist die Schaltwelle 56 mittels eines Dichtringes 82 geführt.

Das elektropneumatische Schaltmittel 72 ist auf einem einstückig mit dem Gehäuseunterteil 16 ausgebildeten Halteflansch 84 befestigbar. Hierzu besitzt der Halteflansch 84 eine Durchgangsöffnung 86, die von der Ventilstange 70 durchgriffen wird. Die Durchgangsöffnung 86 bildet Formmerkmale 88 aus, die mit Formmerkmalen 90 eines Gehäuses 92 zusammenwirken, so daß eine Befestigung des elektropneumatischen Schaltmittels 72 nach Art eines Bajonettverschlusses möglich ist.

Das Gehäuseoberteil 14 und das Gehäuseunterteil 16 bilden jeweils einen Flansch 94 beziehungsweise 96 aus, der die Teilungsfuge 98 zwischen dem Gehäuseoberteil 14 und dem Gehäuseunterteil 16 bildet. Die Flansche 94 und 96 besitzen miteinander korrespondierende Vorsprünge beziehungsweise Ausnehmungen, die ein formschlüssiges Fügen des Gehäuseoberteils 14 mit dem Gehäuseunterteil 16 zu dem Gehäuse 12 gestatten.

Ferner sind in das Gehäuseoberteil 14 und das Gehäuseunterteil 16 miteinander fluchtende Durchgangsöffnungen 100 beziehungsweise 102 integriert, in die jeweils ein Befestigungsmittel 104 einbringbar ist. Die Befestigungsmittel 104, im gezeigten Beispiel sind sechs Befestigungsmittel 104 vorgesehen, dienen der Befestigung des Ansaugluftverteilers 10 an einem Karosserieteil eines die Brennkraftmaschine aufweisenden Kraftfahrzeuges. Die Befestigungsmittel 104 sind unverlierbar in den Durchgangsöffnungen 100 und 102 geführt.

Das Gehäuseunterteil 16 besitzt randoffene Ausnehmungen 106, in die ein Dichtelement (nicht dargestellt) zum dichten Befestigen des Ansaugluftverteilers 10 an dem Karosserieteil einbringbar ist.

Insgesamt ist ein sehr kompakter Ansaugluftverteiler 10 geschaffen, der sich auf folgende Weise leicht, ohne aufwendige Hilfsmittel, montieren läßt.

Das Gehäuseoberteil und das Gehäuseunterteil stehen als Kunststoffspritzgußteile zur Verfügung. In das Gehäuseunterteil 16 wird die Schaltwelle 56 eingesteckt und mittels des Sicherungsringes 78 arretiert. Im Bereich der Auslaßöffnungen 24 werden anschließend die Ventilklappen 60 drehfest auf der Schaltwelle 56 befestigt. Dies kann beispielsweise mittels einer Punktschweißverbindung geschehen.

Das Gasführungselement 26 wird in das Gehäuseoberteil 14 eingelegt und mittels des elektropneumatischen Schaltmittels 38 arretiert. Durch den Bajonettverschluß zwischen dem Gasführungselement 26 und dem Gehäuse 52 des elektropneumatischen Schaltmittels 38 ist eine kraftschlüssige Verbindung gegeben. Entsprechend der hierbei erfolgenden axialen Verlagerung des elektropneumatischen Schaltmittels 38 wird das Gehäuseoberteil 14 und das Gasführungselement 26 in eine definierte Position zueinander gebracht. Die Fixierung erfolgt durch Auflage des Gehäuses 52 in der Aufnahme 50 des Gehäuseoberteils.

Während des Befestigens des elektropneumatischen Schaltmittels 38 an dem Gasführungselement 26 kommt der Ventilteller 48 in Anlagekontakt mit dem Anschlußstutzen 30 und verschließt diesen.

Anschließend wird das Gehäuseoberteil 14 mit dem Gehäuseunterteil 16 gefügt. Hierzu werden die Flansche 94 und 96 formschlüssig gefügt, wobei der Anschlußstutzen 30 des Gasführungselementes 26 in die Abgaszuführöffnung 22 eingreift. Eine kraftschlüssige Verbindung zwischen dem Gehäuseoberteil 14 und dem Gehäuseunterteil 16 kann beispielsweise mittels Schweißung, insbesondere einer Vibrationsschweißung, erfolgen. Hierdurch wird eine Baueinheit des Gehäuses 12 geschaffen, die ohne eine zusätzliche Dichtung zwischen den Gehäuseteilen 14 und 16 auskommt. Selbstverständlich sind auch andere Verbindungstechniken zwischen dem Gehäuseoberteil 14 und dem Gehäuseunterteil 16 möglich.

Schließlich wird auf den Halteflansch 84 das elektropneumatische Schaltmittel 72 befestigt und die Ventilstange 70 mittels der kugelförmigen Ausnehmung 76 mit der Schaltwelle 56 über den Hebel 64 verbunden.

Ein derartig vormontierter Ansaugluftverteiler 10 ist als komplette Baueinheit an die Endverbraucher, beispielsweise die Kraftfahrzeugindustrie, lieferbar. Der Montageaufwand wird auf ein notwendiges Minimum begrenzt.

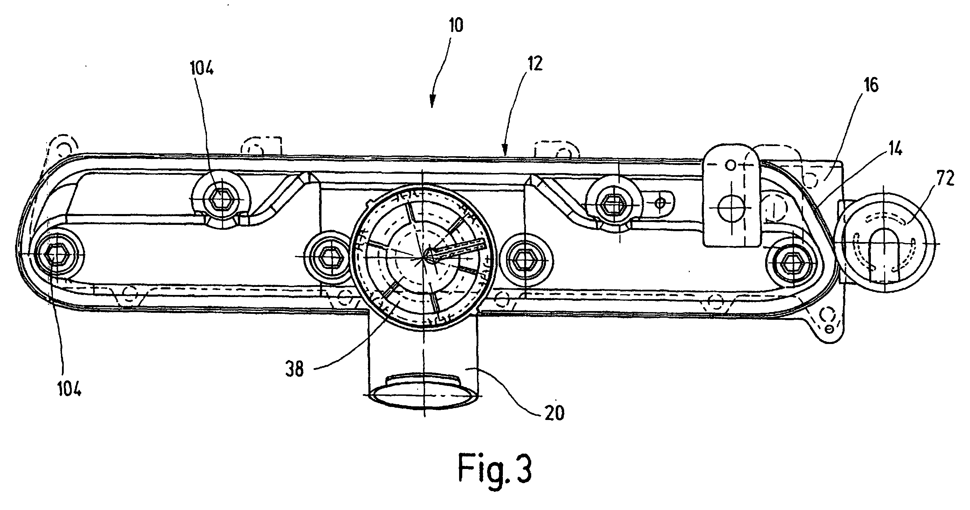

In den Figuren 3 bis 6 sind verschiedene Ansichten beziehungsweise Schnittdarstellungen des Ansaugluftverteilers 10 gezeigt, wobei gleiche Teile wie in den vorhergehenden Figuren mit gleichen Bezugszeichen versehen und nicht nochmals erläutert sind. Anhand der in Figur 3 gezeigten Draufsicht wird nochmals die kompakte Baueinheit des Ansaugluftverteilers 10 deutlich, wobei das Gehäuse 12 aus dem gefügten Gehäuseoberteil 14 und Gehäuseunterteil besteht und an diesem - wie bereits erläutert - die elektropneumatischen Schaltmittel 38 beziehungsweise 72 befestigt sind.

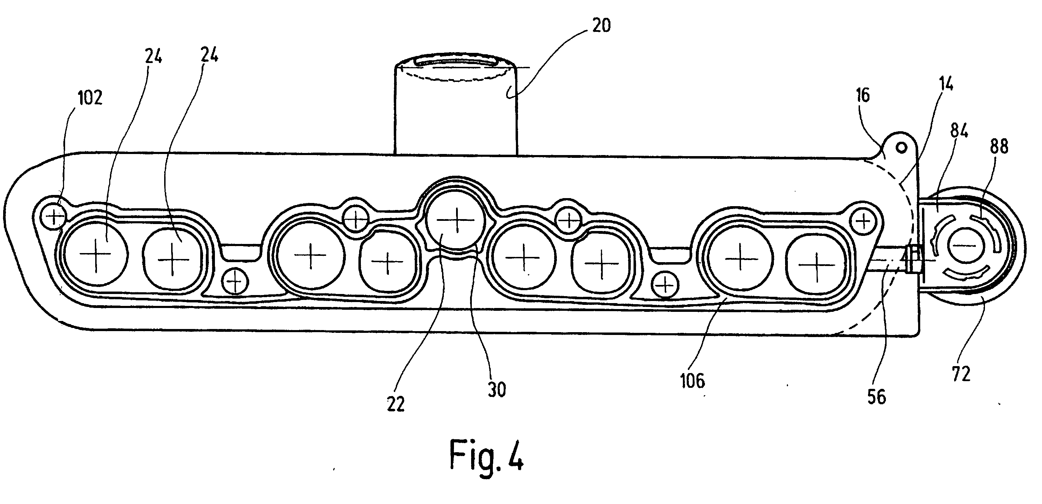

In der in Figur 4 gezeigten Unteransicht des Ansaugluftverteilers 10 wird der Verlauf der Ausnehmung 106, der der Aufnahme einer Dichtungseinrichtung zur Abdichtung des Gehäuses 12 deutlich. Die nicht dargestellte Dichtung umgreift sowohl die Auslaßöffnungen 24 als auch die Abgaszuführöffnung 22. Eine direkte Verbindung zwischen der Abgaszuführöffnung 22 und Auslaßöffnungen 24 besteht jedoch nicht, da der durch die Abgaszuführöffnung 22 geführte Anschlußstutzen 30 mit einer das Abgas führenden Leitung dicht verbunden ist.

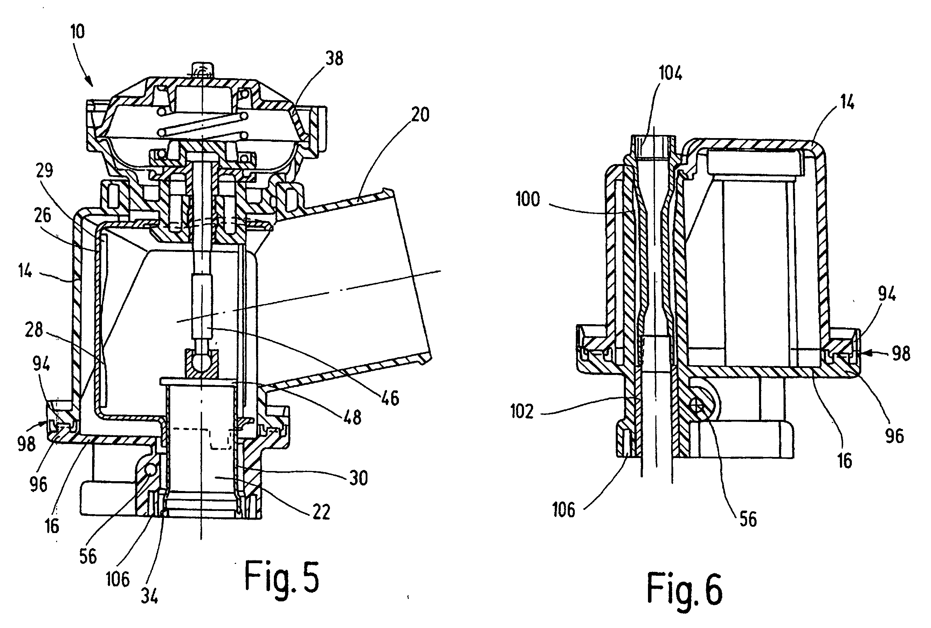

In der in Figur 5 gezeigten Schnittdarstellung im Bereich des Gasführungselementes 26 wird deutlich, daß das Gasführungselement 26 beabstandet zu dem Gehäuseoberteil 14 und dem Gehäuseunterteil 16 angeordnet ist. In dieser Lage wird das Gasführungselement 26 durch die bereits erläuterte Verbindung mit dem elektropneumatischen Schaltmittel 38 gehalten. Durch diesen Abstand wird gewährleistet, daß in das Gasführungselement 26 eintretendes heißes Abgas, das zur Erwärmung des aus einem temperaturbeständigen Material bestehenden Gasführungselementes 26 führt, keine direkte Wärmeleitung auf das wärmeempfindliche Kunststoffmaterial des Gehäuses 12 stattfinden kann.

In der vergrößerten Detailansicht gemäß Figur 8 wird nochmals der Auflagebereich des Gehäuses 52 des elektropneumatischen Schaltmittels 38 in der Aufnahme 50 des Gehäuseoberteiles 14 deutlich. Die Aufnahme 50 bildet Stützstege 108 aus, gegen die das Gehäuse 52 durch die infolge der Drehbewegung erfolgende axiale Verschiebung führbar ist. Auf den Stegen 108 ist ein elastisches Ringelement 110 angeordnet, gegen die das Gehäuse 52 bewegt wird. Das elastische Element 110 übernimmt die Funktion eines Federringes, die eine selbsttätige Lockerung der Bajonettverbindung zwischen dem elektropneumatischen Schaltmittel 38 und dem Gasführungselement 26 verhindert. Über eine Distanzstange 112, die an dem Gehäuse 52 angeformt ist, wird eine maximale axiale Verstellung des Gehäuses 52 begrenzt und gesichert.

In der vergrößerten Detailansicht in Figur 9 wird die Verbindung zwischen der Ventilstange 46 des elektropneumatischen Schaltmittels 38 und dem Ventilteller 48 verdeutlicht. Die Ventilstange 46 besitzt einen Kugelkopf 114, der in eine kugelförmige Ausnehmung 116 eines mit dem Ventilteller 48 festverbundenen beziehungsweise einstückig ausgebildeten Aufnahmeteil 118 einrastbar ist. Hierdurch wird in einfacher Weise eine kraftschlüssige Verbindung zwischen der Ventilstange 46 und dem Ventilteller 48 erreicht.

Da die Funktion des Ansaugluftverteilers 10 allgemein bekannt ist, soll diese hier nur kurz erläutert werden. Der Flansch 20 ist mit einer Luftzuführung verbunden, die beispielsweise an einer Außenseite einer Karosserie eines Kraftfahrzeuges mündet. Der Anschlußstutzen 30 ist mit einer Abgas der Brennkraftmaschine führenden Leitung verbunden. Die Auslaßöffnungen 24 sind über eine Unterdruckquelle mit Zylindern der Brennkraftmaschine verbunden.

Die elektropneumatischen Schaltmittel 38 und 72 sind über nicht dargestellte Verbindungsleitungen mit einer Unterdruckquelle und einem elektrischen Steuergerät verbunden.

Während des bestimmungsgemäßen Einsatzes des Ansaugluftverteilers 10 wird von der Brennkraftmaschine über die Auslaßöffnungen 24 Frischluft aus dem Innenraum des Gehäuses 12 angesaugt. Diese Frischluft gelangt in den Innenraum des Gehäuses 12 über den Flansch 20. Zur Erhöhung eines Wirkungsgrades beziehungsweise zur Verhinderung der Bildung von Stickoxiden, insbesondere bei Dieselmotoren, wird der Frischluft Abgas zugemischt. Die Zumischung des Abgases erfolgt durch Betätigung des elektropneumatischen Schaltmittels 38, so daß der Ventilteller 48 von dem Anschlußstutzen 30 abhebt und eine Verbindung zu der abgasführenden Leitung freigibt. Entsprechend des Öffnungsgrades kann die Menge des zugemischten Abgases variiert werden. Der Öffnungsgrad des Abgasrückführungsventiles wird über die Ansteuerung des elektropneumatischen Schaltmittels 38 eingestellt. Entsprechend eines dort oberhalb einer Membran anliegenden Unterdrucks wird die Membran gegen die Kraft einer Feder verlagert, wodurch die Ventilstange 46 und der daran angeordnete Ventilteller 48 ebenfalls entsprechend verlagert wird. Hierdurch öffnet der Anschlußstutzen 30.

Die Menge der den Zylindern der Brennkraftmaschine zugeführten Frischluft beziehungsweise eines Frischluft-Abgas-Gemisches kann über die Ventilklappen 60 variiert werden. Durch eine Drehbewegung der Schaltwelle 56, werden die Ventilklappen 60 entsprechend verschwenkt, so daß sich ein Durchlaßquerschnitt der Auslaßöffnungen 24 verändert. Die Drehbewegung der Schaltwelle 56 erfolgt durch Ansteuerung des elektropneumatischen Schaltmittels 72. Durch Beaufschlagung mit Unterdruck wird eine die Ventilstange 70 tragende Membran gegen die Kraft eines Federelementes bewegt, wodurch der Hebel 64 mitbewegt wird. Durch die versetzte Anordnung der Schaltwelle 56 und der Kurbel 68 wird diese Hubbewegung in eine Drehbewegung der Schaltwelle 56 umgesetzt.

Die Erfindung beschränkt sich selbstverständlich nicht auf das dargestellte Ausführungsbeispiel. So kann beispielsweise die Formgestalt des Gehäuses 12 entsprechend der Ausbildung eines gesamten Ansaugblockes einer Brennkraftmaschine variieren. Darüber hinaus können an dem Gehäuse 12, insbesondere am Gehäuseoberteil 14, Halteeinrichtungen mit ausgebildet sein, die der Aufnahme von Schalteinrichtungen, beispielsweise Magnetventilen zur Ansteuerung der elektropneumatischen Schaltmittel 38 beziehungsweise 72 dienen. Ferner sind beispielsweise zusätzliche Ventilklappen in der Luftzuführöffnung 18 und/oder der Abgaszuführöffnung 22 denkbar, die eine Einstellung einer unterschiedlichen Zusammensetzung des Frischluft-Abgas-Gemisches dienen können.

## Patentansprüche

1. Ansaugluftverteiler für eine Brennkraftmaschine, mit einer in einem Gehäuse (12) mündenden Luftzuführöffnung (18), wenigstens einer von dem Gehäuse abgehenden Auslassöffnung (24), wobei in der Auslassöffnung (24) eine Ventilklappe (60) zum Verändern eines Durchlassquerschnitts der Auslassöffnung (24) angeordnet ist, und einer in das Gehäuse mündenden Abgaszuführöffnung (22), die mittels eines Abgasrückführungsventils (30, 48) verschließbar ist, sowie elektropneumatischen Schaltmitteln (38, 72) zur Betätigung des Abgasrückführungsventils (30, 48) und der Ventilklappen (60), **dadurch gekennzeichnet, dass** das Gehäuse (12) ein Kunststoffteil ist, wobei im Bereich der Abgaszuführöffnung (22) ein innenliegendes, aus einem temperaturbeständigen Material bestehendes Gasführungselement (26) angeordnet ist, das Gasführungselement (26) einen integrierten Anschlussstutzen (30) für eine Abgasleitung umfasst und das Gasführungselement (26) eine Befestigungseinrichtung (36) für das elektropneumatische Schaltmittel (38) zur Betätigung des Abgasrückführungsventils (30, 48) ausbildet.

2. Ansaugluftverteiler nach Anspruch 1, **dadurch gekennzeichnet, dass** das Gasführungselement (26) beabstandet zu dem Gehäuse (12) gehalten ist.

3. Ansaugluftverteiler nach einem der vorhergehenden Ansprüche, **dadurch gekennzeichnet, dass** eine Positionierung des Gasführungselementes (26) über eine Befestigung des elektropneumatischen Schaltmittels (38) an dem Gasführungselement (26) erfolgt.

4. Ansaugluftverteiler nach einem der vorhergehenden Ansprüche, **dadurch gekennzeichnet, dass** die Befestigungseinrichtung ein von Formmerkmalen (42,44) des Gasführungselementes (26) und des elektropneumatischen Schaltmittels (38) gebildeter Bajonettverschluss ist.

5. Ansaugluftverteiler nach einem der vorhergehenden Ansprüche, **dadurch gekennzeichnet, dass** das elektropneumatische Schaltmittel (38) in eine Aufnahme (50) des Gehäuses (12) durch die Befestigungseinrichtung führbar ist, so dass das Gehäuse (12) durch das Gasführungselement (26) und das elektropneumatische Schaltmittel (38) gehalten ist.

6. Ansaugluftverteiler nach einem der vorhergehenden Ansprüche, **dadurch gekennzeichnet, dass** das Gehäuse (12) zweiteilig ist und aus einem Gehäuseoberteil (14) und einem Gehäuseunterteil (16) besteht.

7. Ansaugluftverteiler nach Anspruch 6, **dadurch gekennzeichnet, dass** das Gehäuseunterteil (16) eine Schaltwelle (56) zur Betätigung der Ventilklappen (60) aufnimmt.

8. Ansaugluftverteiler nach Anspruch 7, **dadurch gekennzeichnet, dass** die Schaltwelle (56) mittels eines elektropneumatischen Schaltmittels (72) betätigbar ist, das auf einem einstückig mit dem Gehäuseunterteil (16) ausgebildeten Halteflansch (84) befestigbar ist.

9. Ansaugluftverteiler nach Anspruch 8, **dadurch gekennzeichnet, dass** das elektropneumatische Schaltmittel (72) mittels eines von Formmerkmalen (88,90) des Halteflansches (84) und des elektropneumatischen Schaltmittels (72) gebildeten Bajonettverschluss festlegbar ist.

10. Ansaugluftverteiler nach Anspruch 6, **dadurch gekennzeichnet, dass** das Gehäuseoberteil (14) und das Gehäuseunterteil (16) verschweißt sind.

11. Ansaugluftverteiler nach einem der Ansprüche 6 bis 10, **dadurch gekennzeichnet, dass** das Gehäuseoberteil (14) und das Gehäuseunterteil (16) fluchtende Durchgangsöffnungen (100,102) zur unverlierbaren Aufnahme von Befestigungsmitteln (104) des Ansaugluftverteilers (10) aufweisen.

12. Ansaugluftverteiler nach einem der vorhergehenden Ansprüche, **dadurch gekennzeichnet, dass** das Gasführungselement (26) Gasleitelemente (28) zur Führung von Luft oder eines Luft-Abgas-Gemisches aufweist.

13. Ansaugluftverteiler nach Anspruch 12, **dadurch gekennzeichnet, dass** das Gasführungselement (26) neben den Gasleitelementen (28) Formmerkmale (29) aufweist, die eine optimale Durchmischung des Luft-Abgas-Gemisches und damit eine optimale Gleichverteilung des Abgases auf die einzelnen Motorzylinder über die Auslassöffnungen (24) unterstützt.

## Claims

1. Intake-air distributor for an internal combustion engine, with an air supply orifice (18) issuing in a housing (12), with at least one outlet orifice (24) emanating from the housing, a valve flap (60) for varying a passage cross section of the outlet orifice (24) being arranged in the outlet orifice (24), and with an exhaust-gas supply orifice (22) which issues into the housing and which can be closed by means of an exhaust-gas recirculation valve (30, 48), and also with electropneumatic switching means (38, 72) for actuating the exhaust-gas recirculation valve (30, 48) and the valve flaps (60), **characterized in that** the housing (12) is a plastic part, there being arranged in the region of the exhaust-gas supply orifice (22) an inner gas-routing element (26) consisting of a temperature-resistant material, the gas-routing element (26) comprising an integrated connection piece (30) for an exhaust-gas line, and the gas-routing element (26) forming a fastening device (36) for the electropneumatic switching means (38) for actuating the exhaust-gas recirculation valve (30, 48).

2. Intake-air distributor according to Claim 1, **characterized in that** the gas-routing element (26) is held so as to be spaced apart from the housing (12).

3. Intake-air distributor according to one of the preceding claims, **characterized in that** a positioning of the gas-routing element (26) takes place via a fastening of the electropneumatic switching means (38) to the gas-routing element (26).

4. Intake-air distributor according to one of the preceding claims, **characterized in that** the fastening device is a bayonet fastening formed by dimensional features (42, 44) of the gas-routing element (26) and of the electropneumatic switching means (38).

5. Intake-air distributor according to one of the preceding claims, **characterized in that** the electropneumatic switching means (38) can be led through the fastening device into a receptacle (50) of the housing (12), so that the housing (12) is held by the gas-routing element (26) and the electropneumatic switching means (38).

6. Intake-air distributor according to one of the preceding claims, **characterized in that** the housing (12) is in two parts and consists of a housing upper part (14) and of a housing lower part (16).

7. Intake-air distributor according to Claim 6, **characterized in that** the housing lower part (16) receives a switching shaft (56) for actuating the valve flaps (60).

8. Intake-air distributor according to Claim 7, **characterized in that** the switching shaft (56) can be actuated by an electropneumatic switching means (72) which can be fastened on a holding flange (84) produced in one piece with the housing lower part (16).

9. Intake-air distributor according to Claim 8, **characterized in that** the electropneumatic switching means (72) can be secured by means of a bayonet fastening formed by dimensional features (88, 90) of the holding flange (84) and of the electropneumatic switching means (72).

10. Intake-air distributor according to Claim 6, **characterized in that** the housing upper part (14) and the housing lower part (16) are welded together.

11. Intake-air distributor according to one of Claims 6 to 10, **characterized in that** the housing upper part (14) and the housing lower part (16) have aligned passage orifices (100, 102) for the captive reception of fastening means (104) of the intake-air distributor (10).

12. Intake-air distributor according to one of the preceding claims, **characterized in that** the gas-routing element (26) has gas guide elements (28) for the routing of air or of an air/exhaust-gas mixture.

13. Intake-air distributor according to Claim 12, **characterized in that** the gas-routing element (26) has, in addition to the gas guide elements (28), dimensional features (29) which assist an optimum intermixing of the air/exhaust-gas mixture and consequently an optimum equal distribution of the exhaust gas to the individual engine cylinders via the outlet orifices (24).

## Revendications

1. Collecteur d'admission pour un moteur à combustion interne avec une ouverture d'adduction d'air (18) qui débouche dans un boîtier (12), avec au moins une ouverture de sortie (24) qui part du boîtier, un clapet de soupape (60) étant placé dans l'ouverture de sortie (24) pour modifier la section transversale de passage de l'ouverture de sortie (24), et avec une ouverture d'adduction de gaz d'échappement (22) qui débouche dans un boîtier et qui peut être fermée à l'aide d'une soupape de recyclage des gaz d'échappement (30, 48), ainsi qu'avec des moyens de commutation (38, 72) électropneumatiques destinés à actionner la soupape de recyclage des gaz d'échappement (30, 48) et les clapets de soupape (60),
**caractérisé en ce que**
le boîtier (12) est une pièce en matériau synthétique, avec un élément de guidage des gaz (26) en un matériau résistant à la température disposé à l'intérieur dans la zone d'ouverture d'adduction de gaz d'échappement (22), l'élément de guidage des gaz (26) comprend un ajutage (30) intégré pour un collecteur d'échappement et l'élément de guidage des gaz (26) constitue une installation de fixation (36) pour le moyen de commutation (38) électropneumatique destiné à actionner la soupape de recyclage des gaz d'échappement (30, 48).

2. Collecteur d'admission selon la revendication 1,
**caractérisé en ce que**
l'élément de guidage des gaz (26) est maintenu à distance du boîtier (12).

3. Collecteur d'admission selon l'une des revendications précédentes,
**caractérisé en ce qu'**
un positionnement de l'élément de guidage des gaz (26) est réalisé par une fixation du moyen de commutation (38) électropneumatique à l'élément de guidage des gaz (26).

4. Collecteur d'admission selon l'une des revendications précédentes,
**caractérisé en ce que**
l'installation de fixation est un emboîtement à baïonnette formé par des caractéristiques de forme (42, 44) de l'élément de guidage des gaz (26) et du moyen de commutation (38) électropneumatique.

5. Collecteur d'admission selon l'une des revendications précédentes,
**caractérisé en ce que**
le moyen de commutation (38) électropneumatique peut être guidé dans un logement (50) du boîtier (12) par l'installation de fixation, de sorte que le boîtier (12) est maintenu par l'élément de guidage des gaz (26) et par le moyen de commutation (38) électropneumatique.

6. Collecteur d'admission selon l'une des revendications précédentes,
**caractérisé en ce que**
le boîtier (12) est en deux parties et est constitué d'une partie supérieure de boîtier (14) et d'une partie inférieure de boîtier (16).

7. Collecteur d'admission selon la revendication 6,
**caractérisé en ce que**
la partie inférieure de boîtier (16) reçoit un arbre de commande (56) pour actionner les clapets de soupape (60).

8. Collecteur d'admission selon la revendication 7,
**caractérisé en ce que**
l'arbre de commande (56) peut être actionné à l'aide d'un moyen de commande électropneumatique (72) qui peut être fixé sur un flanc de maintien (84) formant une seule pièce avec la partie inférieure de boîtier (16).

9. Collecteur d'admission selon la revendication 8,
**caractérisé en ce que**
le moyen de commande électropneumatique (72) peut être fixé à l'aide d'un emboîtement à baïonnette formé par des caractéristiques de forme (88, 90) du flanc de maintien (84) et du moyen de commande électropneumatique (72).

10. Collecteur d'admission selon la revendication 6,
**caractérisé en ce que**
la partie supérieure de boîtier (14) et la partie inférieure de boîtier (16) sont soudées.

11. Collecteur d'admission selon l'une des revendications 6 à 10,
**caractérisé en ce que**
la partie supérieure de boîtier (14) et la partie inférieure de boîtier (16) présentent des ouvertures de passage (100, 102) alignées destinées à recevoir de manière imperdable des moyens de fixation (104) du collecteur d'admission (10).

12. Collecteur d'admission selon l'une des revendications précédentes,
**caractérisé en ce que**
l'élément de guidage des gaz (26) présente des éléments directionnels des gaz (28) pour guider l'air ou un mélange d'air et de gaz d'échappement.

13. Collecteur d'admission selon la revendication 12,
**caractérisé en ce que**
l'élément de guidage des gaz (26) présente, outre les éléments directionnels des gaz (28), des caractéristiques de forme (29) qui contribuent à malaxer de façon optimale le mélange d'air et de gaz d'échappement et donc à répartir de façon optimale le gaz d'échappement sur chacun des cylindres du moteur par les ouvertures de sortie (24).
